# EUROPÄISCHE PATENTSCHRIFT

(11) **EP 1 627 166 B1**
(45) Veröffentlichungstag und Bekanntmachung des Hinweises auf die Patenterteilung: **04.04.2012**
(21) Anmeldenummer: 04733557.5
(22) Anmeldetag: 18.05.2004
(51) Int. Cl.: F16J 15/16, F16J 15/34, F16D 25/12

(54) **KRAFTFAHRZEUG-ANTRIEBSSTRANG MIT EINER ELEKTROMASCHINE**
DRIVE TRAIN OF A MOTOR VEHICLE WITH AN ELECTRIC MACHINE
CHAINE CINEMATIQUE DE VEHICULE AUTOMOBILE AVEC MACHINE ELECTRIQUE

(30) Priorität: 23.05.2003 DE 10323253
(43) Veröffentlichungstag der Anmeldung: 22.02.2006
(73) Patentinhaber: ZF Friedrichshafen AG, 88038 Friedrichshafen (DE)
(72) Erfinder: REISCH, Matthias, 88214 Ravensburg (DE); WÜRTHNER, Maik, 88048 Friedrichshafen (DE); HEITMANN, Axel, 85049 Ingolstadt (DE); KILIAN, Stefan, 88045 Friedrichshafen (DE)
(86) Internationale Anmeldenummer: PCT/EP2004/005330
(87) Internationale Veröffentlichungsnummer: WO 2004/104454

(56) Entgegenhaltungen:
- DE-A- 10 115 504
- US-A- 2 418 707
- US-A- 2 898 132
- US-A- 3 038 733
- US-A- 5 980 115

## Beschreibung

Die Erfindung betrifft eine Abdichtung einer innerhalb eines Kraftfahrzeug-Antriebsstrangs angeordneten Elektromaschine nach dem Oberbegriff des Anspruchs 1.

Seit geraumer Zeit sind Antriebssysteme für Kraftfahrzeuge bekannt, die neben einem herkömmlichen Verbrennungsmotor auch eine Elektromaschine aufweisen, welche wechselweise oder auch gleichzeitig in den Antriebsstrang des Kraftfahrzeugs eingebunden werden. Diese als "Hybrid-Antriebe" bezeichneten Antriebssysteme sind aus ökologischer Sicht vorteilhaft, da mit diesen im gemischten Verkehr (Stadt/Land) im Vergleich mit herkömmlichen Antrieben auf Basis von ausschließlich Verbrennungsmotoren deutliche Energieeinsparungen erzielbar sind.

Durch die DE 199 17 665 A1 ist ein solcher Hybridantrieb für ein Kraftfahrzeug offenbart, der in einem Antriebsstrang zwischen einem Verbrennungsmotor und einem Fahrzeuggetriebe eine erste elektrische Maschine und mit einer Getriebeeingangswelle permanent verbundene zweite elektrische Maschine aufweist. Ferner ist zwischen den jeweils als Motor und als Generator betreibbaren elektrischen Maschinen und dem Verbrennungsmotor jeweils eine schaltbare Kupplung angeordnet.

In der Praxis spielt die axiale Baulänge des Kraftfahrzeug-Antriebsstrangs insbesondere bei Front-Quer-Anordnungen eine wesentliche Rolle. Um bei besagten Hybridantrieben einen besonders kurz bauenden Antrieb zu erzielen, hat es sich als vorteilhaft erwiesen, den freien Bauraum innerhalb des Rotors der Elektromaschine zu nutzen. In diesem Zusammenhang ist es bekannt, dass sich dort wenigstens eine Kupplung des Antriebssystems vorteilhaft anordnen lässt, wobei vorzugsweise nasslaufende beziehungsweise ölgekühlte Lamellenkupplungen zum Einsatz kommen können. Solch eine Antriebsanordnung ist zum Beispiel aus DE-A-10115504 bekannt.

Als nachteilig hat sich jedoch herausgestellt, dass der Ringspalt zwischen dem Rotor und dem Stator der Elektromaschine, der an sich ölfrei sein sollte, mit dem besagten Kühlöl benetzt wird, da das Kühlöl fliehkraftbedingt radial durch die Lamellen der Lamellenkupplung nach außen befördert und auf einem großen Durchmesser in den Ölsumpf zurück befördert wird. In durchgeführten Untersuchungen haben sich bei derartigen Durchmessern und aufgrund der in den Kraftfahrzeugantriebssträngen üblichen Drehzahlen beziehungsweise hohen Umfangsgeschwindigkeiten berührende Dichtungen für den Ringspalt als nicht zweckmäßig erwiesen, da diese einem relativ hohen Verschleiß unterliegen. Hier setzt die nachfolgend beschriebene Erfindung an.

Die Aufgabe der Erfindung ist es, eine verschleißarme Abdichtung einer innerhalb eines Kraftfahrzeug-Antriebsstrangs angeordneten Elektromaschine zu einem innerhalb eines freien Bauraums des Rotors der Elektromaschine angeordneten nasslaufenden beziehungsweise ölgekühlten Lamellenschaltelement, beispielsweise einer Lamellenkupplung, zu schaffen, mit dem ein weitestgehend ölfreier Ringspalt zwischen dem Rotor und dem Stator der Elektromaschine realisierbar ist.

Erfindungsgemäß wird diese Aufgabe in Verbindung mit den Merkmalen im Oberbegriff des Anspruchs 1 dadurch gelöst, dass das Lamellenschaltelement innerhalb eines freien Bauraums des Rotors angeordnet ist, wobei der Bauraum mit einem Kühlölablauf versehen ist, und zur Erzielung eines weitestgehend ölfreien Ringspaltes zwischen dem Rotor und dem Stator der Elektromaschine stirnseitig des Ringspaltes wenigstens eine Dichtung angeordnet ist, die ihrerseits zumindest bei hohen Drehzahlen des Rotors nach Art einer Spaltdichtung berührungsfrei abdichtend ausgebildet ist.

Gemäß einer vorteilhaften Ausgestaltung der Erfindung ist die Dichtung derart ausgebildet und am Rotor angeordnet, dass diese im Ruhezustand oder bei niedrigen Drehzahlen den Ringspalt berührend abdichtet und bei hohen Drehzahlen den Ringspalt freigibt.

Des Weiteren wird im Sinne der Erfindung vorgeschlagen, dass die Dichtung durch einen an sich bekannten V-Ring gebildet ist.

Zudem ist vorgesehen, dass dem Ringspalt vorzugsweise an der zur Dichtung gegenüberliegenden Stirnseite der Elektromaschine eine Lufteinlassöffnung zugeordnet ist.

Schließlich wird vorgeschlagen, dass die Lufteinlassöffnung über einen Entlüfter mit dem Getriebeinneren eines am Kraftfahrzeug-Antriebsstrang angeschlossenen Fahrzeuggetriebes verbunden ist.

Die erfindungsgemäße Abdichtung der innerhalb eines Kraftfahrzeug-Antriebsstrangs angeordneten Elektromaschine zu einem radial innerhalb des freien Bauraums des Rotors der Elektromaschine angeordneten nasslaufenden Lamellenschaltelement, beispielsweise einer Lamellenkupplung oder einer Lamellenbremse, hat im Hinblick auf den Stand der Technik zunächst den wesentlichen Vorteil, dass bereits in den Ringspalt eingedrungenes Öl wirkungsvoll aus demselben abgeführt wird. Weiterhin ist diese Abdichtung einfach zu bewerkstelligen und als besonders verschleißarm einzuschätzen. Durch die erfindungsgemäßen Maßnahmen wird die Elektromaschine länger funktionsfähig gehalten, so dass eine höhere Standzeit derselben zu verzeichnen ist. Außerdem steigt die Öllebensdauer, da das Öl im heißen Ringspalt geschädigt wird.

Ferner hat aufgrund der geringen Reibung der Einsatz eines V-Ringes kaum negativen Einfluss auf das Drehmoment der Elektromaschine. Die besondere Konstruktion des V-Ringes bewirkt, dass ein minimaler Leistungsverlust mit zunehmender Drehzahl noch weiter zurückgeht. Ebenso kann durch einen solchen V-Ring bei Stillstand der Elektromaschine ein Eindringen von Öl in den Ringspalt wirkungsvoll behindert werden.

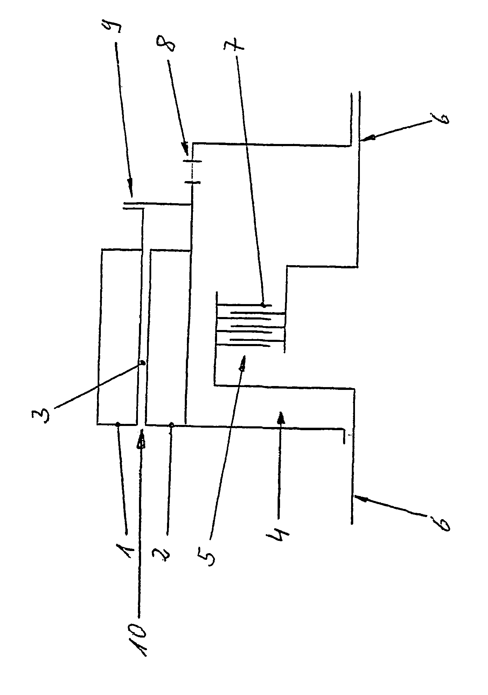

Die Erfindung wird nachstehend anhand eines in der Zeichnung dargestellten Ausführungsbeispieles näher erläutert. Die einzige Figur zeigt schematisch einen Teillängsschnitt einer innerhalb eines Kraftfahrzeug-Antriebsstrangs angeordneten Elektromäschine.

Danach besteht die Elektromaschine, die als Antriebsmotor und/oder als Generator Verwendung finden kann, bekanntermaßen aus einem Stator 1 und einem in diesem drehbar angeordneten Rotor 2, zwischen denen ein Ringspalt 3 ausgebildet ist.

Innerhalb eines freien Bauraums 4 des Rotors 2 ist eine Kupplung in Form einer nasslaufenden beziehungsweise ölgekühlten Lamellenkupplung 5 angeordnet und mit dem Kraftfahrzeug-Antriebstrang 6 wirkverbunden. Anstelle der Lamellenkupplung kann auch eine Lamellenbremse verwendet werden.

Während des Betreibens der Lamellenkupplung 5 wird zum Kühlen derselben Öl benötigt, welches, wie bereits oben erläutert, aus einem nicht näher dargestellten Ölsumpf durch die Lamellen 7 der Lammellenkupplung 5 aufgenommen und fliehkraftbedingt in denselben radial nach außen fließt. Anschließend fließt das Fühlmittel durch einen Kühlölablauf 8 hindurch auf großem Durchmesser in den Ölsumpf zurück.

Während der vorstehend erläuterten Ölkühlung kann es zu einem ungewollten Öleintritt in den Ringspalt 3 kommen, welches sich nachteilig auf die Funktion und die Lebensdauer der Elektromaschine auswirken kann.

Um diesem zu begegnen, also um den Öleintritt in den Ringspalt 3 während des Betreibens der Elektromaschine weitestgehend zu verhindern oder bereits in den Ringspalt 3 eingedrungenes Öl schnellstmöglich aus demselben herauszufördern, ist erfindungsgemäß stirnseitig des Ringspaltes 3 wenigstens eine Dichtung 9 angeordnet, die ihrerseits bei zumindest hohen Drehzahlen des Rotors 2 nach Art einer Spaltdichtung berührungsfrei abdichtend ausgebildet ist.

Die Funktionsweise der Spaltdichtung ist derart, dass, sobald sich die Elektromaschine beziehungsweise deren Rotor 2 dreht, sich das im Ringspalt 3 befindliche Öl infolge von Fliehkräften aus dem Ringspalt 3 heraus bewegt. Ferner wird durch die Drehung des Rotors 2 eine Luftströmung erzeugt, die ebenfalls ein Eindringen von Öl von außen in den Ringspalt 3 behindert.

Um das Ausbringen von Öl aus dem Ringspalt 3 heraus weiter vorteilhaft zu unterstützen, kann es angezeigt sein, gemäß einer bevorzugten Ausführungsform der Erfindung an der der Dichtung 9 gegenüberliegenden Stirnseite der Elektromaschine eine Lufteinlassöffnung 10 vorzusehen, woraus eine weiter verstärkte Luftströmung innerhalb des Ringspaltes 3 im Sinne des Austreibens von Öl, aber auch im Bereich der Dichtung 9 (Spaltdichtung) selbst im Sinne der Verhinderung des Eindringens von Öl von außen in den Ringspalt 3 schon bei geringen Drehgeschwindigkeiten des Rotors 2 resultiert.

Als vorteilhaft hat sich des Weiteren erwiesen, die Lufteinlassöffnung 10 über einen Entlüfter mit dem Getriebeinneren eines am Kraftfahrzeug-Antriebsstrang angeschlossenen Fahrzeuggetriebes zu verbinden.

Zudem kann es unter Umständen auch bei stehender Elektromaschine beziehungsweise stehender Lamellenkupplung 5 und entsprechender Getriebeschräglage zu einem Öleintritt in den Ringspalt 3 kommen.

Um diesem Missstand zu begegnen, ist die Dichtung 9 in vorteilhafter Weise derart ausgebildet und am Rotor 2 angeordnet, dass dieselbe im Ruhezustand oder bei niedrigen Drehzahlen den Ringspalt 3 berührend abdichtet und bei hohen Drehzahlen den Ringspalt 3 freigibt, damit sich die volle Wirkung einer Spaltdichtung entfalten kann.

Als besonders geeignet für die Ausbildung einer derartigen Dichtung 9 hat sich ein an sich bekannter V-Ring erwiesen, dessen Vorteile bereits oben ausführlich beschrieben sind.

### Bezugszeichen

- 1: Stator
- 2: Rotor
- 3: Ringspalt
- 4: Bauraum
- 5: Lamellenkupplung
- 6: Kraftfahrzeug-Antriebsstrang
- 7: Lamellen
- 8: Kühlölablauf
- 9: Dichtung
- 10: Lufteinlassöffnung

## Patentansprüche

1. Kraftfahrzeug-Antriebsstrang (6) mit einer einen Rotor (2) und einen Stator (1) aufweisenden Elektromaschine und einem Öl gekühlten Lamellenschaltelement (5), **dadurch gekennzeichnet, dass** das Lamellenschaltelement (5) innerhalb eines freien Bauraums (4) des Rotors (2) angeordnet ist, wobei der Bauraum (4) mit einem Kühlölablauf (8) versehen ist, und zur Erzielung eines weitestgehend Öl freien Ringspaltes (3) zwischen dem Rotor (2) und dem Stator (1) der Elektromaschine stirnseitig des Ringspaltes (3) wenigstens eine Dichtung (9) angeordnet ist, die zumindest bei hohen Drehzahlen des Rotors (2) nach Art einer Spaltdichtung berührungsfrei abdichtend ausgebildet ist.

2. Kraftfahrzeug-Antriebsstrang nach Anspruch 1, **dadurch gekennzeichnet, dass** als Lamellenschaltelement (5) eine Lamellenkupplung oder eine Lamellenbremse vorgesehen ist.

3. Kraftfahrzeug-Antriebsstrang nach Anspruch 1 oder 2, **dadurch gekennzeichnet, dass** die Dichtung (9) derart ausgebildet und am Rotor (2) angeordnet ist, dass dieselbe im Ruhezustand oder bei niedrigen Drehzahlen den Ringspalt (3) berührend abdichtet und bei hohen Drehzahlen den Ringspalt (3) freigibt.

4. Kraftfahrzeug-Antriebsstrang nach einem der vorhergehenden Ansprüche, **dadurch gekennzeichnet, dass** die Dichtung (9) durch einen an sich bekannten V-Ring gebildet ist.

5. Kraftfahrzeug-Antriebsstrang nach einem der vorhergehenden Ansprüche, **dadurch gekennzeichnet, dass** dem Ringspalt (3) vorzugsweise an der zur Dichtung (9) gegenüberliegenden Stirnseite der Elektromaschine eine Lufteinlassöffnung (10) zugeordnet ist.

6. System mit einem Kraftfahrzeug-Antriebsstrang (6) nach Anspruch 5 und einem Fahrzeuggetriebe, **dadurch gekennzeichnet, dass** das Fahrzeuggetriebe am Kraftfahrzeug-Antriebsstrang (6) angeschlossen ist, wobei die Lufteinlassöffnung (10) über einen Entlüfter mit dem Getriebeinneren des Fahrzeuggetriebes verbunden ist.

## Claims

1. Motor vehicle drivetrain (6) having an electric machine which has a rotor (2) and a stator (1) and having an oil-cooled multiplate shift element (5), **characterized in that** the multiplate shift element (5) is arranged within a free installation space (4) of the rotor (2), wherein the installation space (4) is provided with a cooling oil outlet (8), and to attain a substantially oil-free annular gap (3) between the rotor (2) and the stator (1) of the electric machine, at least one seal (9) is arranged at the end side of the annular gap (3), which seal is designed to provide non-contact sealing, in the manner of a gap seal, at least at high rotational speeds of the rotor (2).

2. Motor vehicle drivetrain according to Claim 1, **characterized in that** a multiplate clutch or a multiplate brake is provided as a multiplate shift element (5).

3. Motor vehicle drivetrain according to Claim 1 or 2, **characterized in that** the seal (9) is designed and arranged on the rotor (2) so as to seal off the annular gap (3) by contact in the rest state or at low rotational speeds and to open up the annular gap (3) at high rotational speeds.

4. Motor vehicle drivetrain according to one of the preceding claims, **characterized in that** the seal (9) is formed by a V-ring such as is known per se.

5. Motor vehicle drivetrain according to one of the preceding claims, **characterized in that** the annular gap (3) is preferably assigned an air inlet opening (10) on that end side of the electric machine which is situated opposite the seal (9).

6. System having a motor vehicle drivetrain (6) according to Claim 5 and having a vehicle transmission, **characterized in that** the vehicle transmission is connected to the motor vehicle drivetrain (6), wherein the air inlet opening (10) is connected to the interior of the vehicle transmission via a vent.

## Revendications

1. Chaîne cinématique d'un véhicule automobile (6) avec une machine électrique présentant un rotor (2) et un stator (1), et avec un élément de commutation à disques (5) refroidi à l'huile, **caractérisée en ce que** l'élément de commutation à disques (5) est disposé à l'intérieur d'un espace de construction libre (4) du rotor (2), l'espace de construction (4) étant muni d'une sortie d'huile de refroidissement (8), et au moins une garniture d'étanchéité (9) étant disposée de manière à obtenir un interstice annulaire (3) sensiblement exempt d'huile entre le rotor (2) et le stator (1) de la machine électrique du côté frontal de l'interstice annulaire (3), ladite garniture d'étanchéité étant réalisée de manière à réaliser l'étanchéité au moins pour des vitesses de rotation élevées du rotor (2) à la manière d'une garniture d'étanchéité à fente sans contact.

2. Chaîne cinématique d'un véhicule automobile selon la revendication 1, **caractérisée en ce que** l'on prévoit comme élément de commutation à disques (5) un accouplement à disques ou un frein à disques.

3. Chaîne cinématique d'un véhicule automobile selon la revendication 1 ou 2, **caractérisée en ce que** la garniture d'étanchéité (9) est réalisée et est disposée sur le rotor (2) de telle sorte que celle-ci scelle hermétiquement l'interstice annulaire (3) dans l'état de repos ou dans le cas de faibles vitesses de rotation, et libère l'interstice annulaire (3) dans le cas de vitesses de rotation élevées.

4. Chaîne cinématique d'un véhicule automobile selon l'une quelconque des revendications précédentes, **caractérisée en ce que** la garniture d'étanchéité (9) est formée par une bague en V connue en soi.

5. Chaîne cinématique d'un véhicule automobile selon l'une quelconque des revendications précédentes, **caractérisée en ce que** l'on associe à l'interstice annulaire (3), de préférence du côté frontal de la machine électrique opposé à la garniture d'étanchéité (9), une ouverture d'entrée d'air (10).

6. Système comprenant une chaîne cinématique d'un véhicule automobile (6) selon la revendication 5 et une transmission de véhicule, **caractérisé en ce que** la transmission de véhicule est raccordée sur la chaîne cinématique du véhicule (6), l'ouverture d'entrée d'air (10) étant raccordée à l'intérieur de la transmission du véhicule par le biais d'un dispositif d'évacuation d'air.
